# EUROPEAN PATENT SPECIFICATION

(11) **EP 2 562 439 B1**
(45) Date of publication and mention of the grant of the patent: **24.06.2015**
(21) Application number: 11772001.1
(22) Date of filing: 19.04.2011
(51) Int. Cl.: F16F 7/08

(54) **SEISMIC ISOLATION DEVICE**
SEISMISCHE ISOLATIONSVORRICHTUNG
DISPOSITIF D'ISOLATION SISMIQUE

(30) Priority: 21.04.2010 JP 2010097729
(43) Date of publication of application: 27.02.2013
(73) Proprietor: Ideal Brain Co., Ltd., Tokyo 104-0042 (JP)
(72) Inventor: Takanori, Sato, Tokyo 154-0002 (JP)
(74) Representative: Plougmann & Vingtoft A/S
(86) International application number: PCT/JP2011/059606
(87) International publication number: WO 2011/132666

(56) References cited:
- JP-A- 9 317 029
- JP-A- 2008 101 451
- JP-A- 2008 116 039
- JP-A- 2009 234 743
- JP-A- 2009 293 210
- JP-A- 2010 019 007
- JP-A- 2010 019 371
- JP-A- 2010 024 764
- US-A1- 2009 094 906

## Description

### Technical Field

The present invention relates to a seismic isolation device used in an exhibition case or exhibition stand of a museum or art gallery, a server rack, a warehouse having article shelves, a production line of a factory, and the like, and in particular, relates to a seismic isolation device that does not easily operate when a minor earthquake or mechanical vibration occurs and achieves a seismic isolation effect only when a major earthquake or the like occurs.

### Background Art

A seismic isolation device that combines a tabular base board including a plurality of curved convex protrusions and a smooth hard sliding plate made to be in contact with each other with a low friction coefficient due to mutual point contact has been known (see Patent Literature 1).

### Citation List

### Patent Literature

Patent Literature 1: Japanese Patent Application Laid-Open No. 2008-116039 also published as US 2009/0094906 A1 which discloses a seismic isolation device according to the preamble of independent claim 1.

### Summary of the Invention

### Technical Problem

In a conventional seismic isolation device, the point contact is maintained to always act as a seismic isolation device. Thus, even in a minor to medium-sized earthquake (for example, about 1 to 4 according to the Japan Meteorological Agency seismic intensity scale) that frequently occurs, the seismic isolation device may be actuated without returning to the original position automatically, so that the work to return to the original position needs to be done each time. If partial base isolation is applied inside a room, a seismic isolation device may be shifted after people or devices rush to the room so that the work to return to the original position needs to be done each time. Moreover, a building may be swayed at a low frequency for a long period due to an influence of wind or a vibration of automobiles or machines and a seismic isolation device may be actuated without returning to the original position automatically, so that the work to return to the original position needs to be done each time. In the description that follows, the "seismic intensity" in the present application means a seismic intensity based on the Japan Meteorological Agency seismic intensity scale.

To solve such problems, a seismic isolation device according to the present invention is invented to avert a major disaster by being actuated only in a major earthquake (for example, the seismic intensity of 5 or more) without being actuated in a minor to medium-sized earthquake (for example, the seismic intensity of 1 to 4) that frequently occurs without hindrance of daily work.

### Solution to Problem

A seismic isolation device including a tabular base board having a plurality of curved convex protrusions formed thereon and a sliding plate having a sliding contact surface that is slidingly in contact with the plurality of curved convex protrusions and placed on a side of the curved convex protrusions of the base board, wherein the sliding contact surface of the sliding plate includes a plurality of high-friction portions arranged corresponding to the plurality of curved convex protrusions and enabling stable rest in a contact state with the curved convex protrusions and a sliding surface other than the high-friction portions that has a lower apparent friction coefficient than the high-friction portions. That is, the seismic isolation device is configured in such a way that the sliding contact plate of the sliding plate includes the plurality of high-friction portions arranged corresponding to the curved convex protrusions and the sliding surface other than the high-friction portions and the high-friction portion has a high apparent friction coefficient enabling stable rest in a contact state with the curved convex protrusion and the sliding surface has a lower apparent friction coefficient than the high-friction portion.

Preferably, the high-friction portion on the sliding contact surface of the sliding plate is a curved concave portion formed so as to have a curved concave surface in a same shape as a curved surface of the curved convex protrusion of the base board and have a depth smaller than a height of the curved convex protrusion.

Only the sliding surface on the sliding contact surface of the sliding plate is uniformly coated with a lubricant and thereby, as a result, the apparent friction coefficient of the uncoated high-friction portion may have a higher apparent friction coefficient than the coated sliding surface. Further, the high-friction portions on the sliding contact surface of the sliding plate is preferably sandblasted.

The high-friction portion on the sliding contact surface of the sliding plate is a through hole formed so as to have a smaller diameter than the diameter of the curved convex protrusion, thereby fitting only a portion of the curved convex protrusion into the through hole.

Incidentally, the apparent friction coefficient of the high-friction portion when the base board and the sliding plate according to the present invention are at rest is preferably 0.1, which is a friction coefficient at which the base board and the sliding plate do not start to slide when the seismic intensity based on the Japan Meteorological Agency seismic intensity scale is 4 or less and the base board and the sliding plate start to slide when the seismic intensity is weak 5 or more.

### Advantageous Effects of Invention

According to a seismic isolation device in the present invention, by setting the apparent friction coefficient of the plurality of high-friction portions in contact with the curved convex protrusions of the base board at rest to be larger than the apparent friction coefficient of the sliding surface, the above sliding plate does not easily move even when a small vibration occurs so that daily work around or on the seismic isolation device will not be hindered.

Because a recess as the high-friction portion of the sliding plate is formed in the same shape and the same arrangement as the curved convex protrusion of the base board and the depth thereof is shallower than the height of the curved convex protrusion of the base board in the sliding plate to create the high friction, the high-friction portion of the sliding plate can be manufactured at low cost. In addition, the high-friction portion of the sliding plate can be manufactured at low cost also by making the high-friction portion as a through hole. Further, the high-friction portion on the sliding contact surface of the sliding plate can be manufactured at low cost by sandblasting. If the sliding surface of the sliding plate is coated with a lubricant or coated with a lubricant mixed with powder uniformly, once the sliding plate starts to move, the sliding plate moves with less friction and therefore, an excellent seismic isolation effect can be achieved.

Further, by adopting the above configuration, for example, the thickness of the base board can be set to 1 mm and the height from the base board including the thickness of the sliding plate when the sliding plate is put on the base board can be set to about 1 to 3 mm and therefore, the seismic isolation device can be made a basic unit of 4 mm in thickness constituted of the base board and the sliding plate. This enables a bogie, forklift and the like to get on to and off from a seismic isolation device smoothly from or to a periphery where no seismic isolation device is installed.

### Brief Description of Drawings

Fig. 1 is a sectional side view of a seismic isolation device according to a first embodiment of the present invention and a base board and a sliding plate are depicted by floating from an installation floor to be understood easily.
Fig. 2A is a plan view of the base board constituting the seismic isolation device of the present invention.
Fig. 2B is a side view of the base board shown in Fig. 2A and the base board is depicted by floating from the installation floor to be understood easily.
Fig. 3A is a plan view of a sliding plate constituting the seismic isolation device according to the first embodiment of the present invention.
Fig. 3B is a side view of the sliding plate shown in Fig. 3A and the sliding plate is depicted by floating from the installation floor to be understood easily.
Fig. 4 is a schematic partially enlarged sectional side view showing a state before a metallic mold for forming curved convex protrusions being pressed by using a metallic plate a and adjusting a press volume to form a recess in the sliding plate of the seismic isolation device according to the first embodiment of the present invention.
Fig. 5 is a sectional side view of a seismic isolation device according to a second embodiment of the present invention. A base board and a sliding plate are depicted by floating from an installation floor to be understood easily.
Fig. 6 is a sectional side view of a seismic isolation device according to a third embodiment of the present invention. A base board and a sliding plate are depicted by floating from an installation floor to be understood easily.
Fig. 7 is a sectional side view of a seismic isolation device according to a fourth embodiment of the present invention. A base board and a sliding plate are depicted by floating from an installation floor to be understood easily.
Fig. 8 is a sectional view of the sliding plate and a punching tool showing a processing direction when the sliding plate is punched.
Fig. 9 is a sectional side view when a back side of the sliding plate is uniformly coated with a lubricant mixed with powder in the seismic isolation device according to the third embodiment.
Fig. 10 is a graph showing a relationship between an apparent friction coefficient µ and a moving displacement δ to compare apparent friction coefficients when a seismic isolation device according to the present invention and a conventional seismic isolation device are moved from a resting state.

### Description of Embodiments

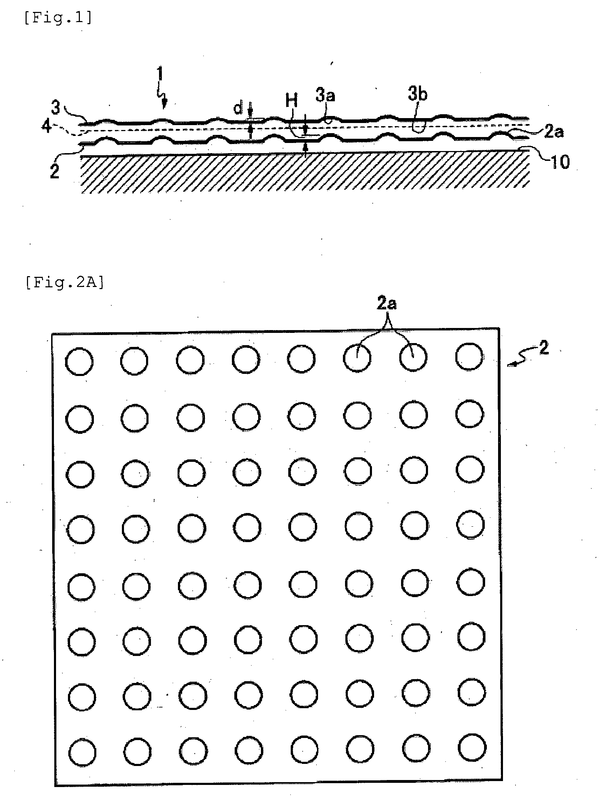

A seismic isolation device 1 according to the present invention is configured to achieve a base isolation effect by, as shown in Figs. 1 and 5 to 7, disposing a sliding plate 3 configured by being provided with high-friction portions such as recesses 3a on a base board 2 configured by being provided with curved convex protrusions 2a in a flat plate body in such a way that the curved convex protrusion 2a and the high-friction portion such as the recess 3a overlap and engage with each other, and the curved convex protrusion 2a and the high-friction portion such as the recess 3a overlapping and engaging in a normal resting state get out of an overlapping state of the curved convex protrusion and the high-friction portion and the sliding plate 3 moves in a horizontal direction relative to the base board 2 only when a major earthquake occurs.

### Embodiments

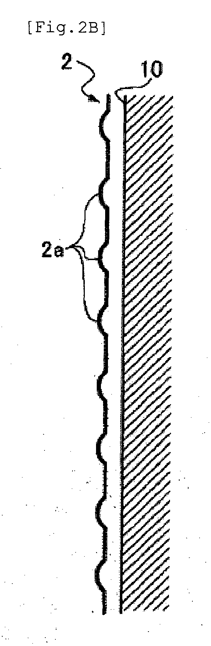

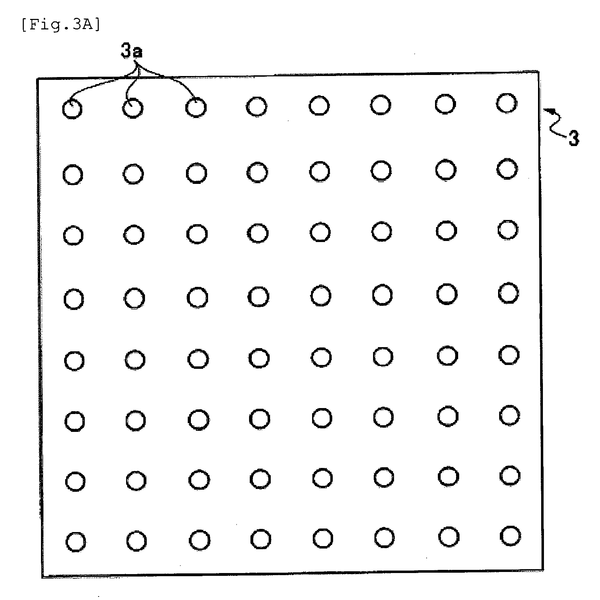

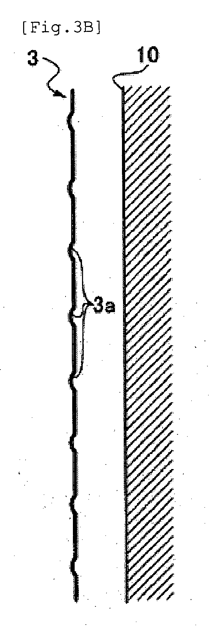

The seismic isolation device 1 according to the first embodiment of the present invention is a pair of the base board 2, as shown in Figs. 2A and 2B, in a flat plate shape of about 500 x 500 mm with the thickness of about 1 mm in which a plurality of curved convex protrusions (height: 1 mm, diameter: 10 mm) 2a is formed with 25-mm pitches and the smooth sliding plate 3, as shown in Figs. 3A and 3B, of the size of about 500 x 500 mm with the thickness of about 1 to 3 mmplaced by making a sliding contact surface 3b abut the curved convex protrusion 2a of the base board 2.

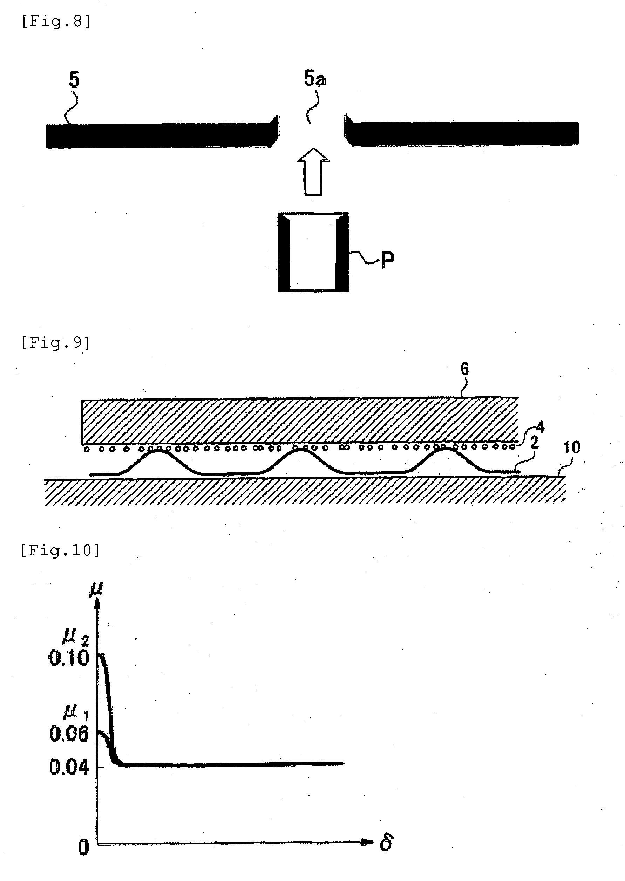

As shown in Figs. 1 to 9, the apparent friction coefficient of the high-friction portion on the sliding contact surface 3b of the sliding plate 3 with which the curved convex protrusion 2a of the base board 2 is in contact at rest initially after installation is made high, that is, a static friction coefficient µ₂ of a seismic isolation device according to the present invention that moves horizontally from an engagement resting state when, as shown in Fig. 10, the seismic intensity of weak 5 (the acceleration is about 100 gal) or more occurs. µ₁ is a conventional static friction coefficient (µ₁ = 0.06 when the curvature radius of convex curved surface is 150 mm) and the friction coefficient 0.04 is the dynamic friction coefficient of the seismic isolation device 1.

Various structures are proposed to realize the high friction coefficient. In the first embodiment, as shown in Fig. 1, a high-friction portion of the sliding plate 3 has the recess 3a formed in the same shape and the same arrangement as the curved convex protrusion 2a of the base board 2 and a depth d of the recess 3a is formed to be shallower than a height H of the curved convex protrusion 2a of the base board 2. The recess 3a overlaps and engages with the curved convex protrusion 2a, the depth of the engaging recess is 0.05 mm to 0.50 mm, and a high friction coefficient µ₂ at this point when moving horizontally from an engagement state of the curved convex protrusion 2a and the recess 3a is 0.10 to 0.40, but a dynamic friction coefficient after starting to move is about 0.04.

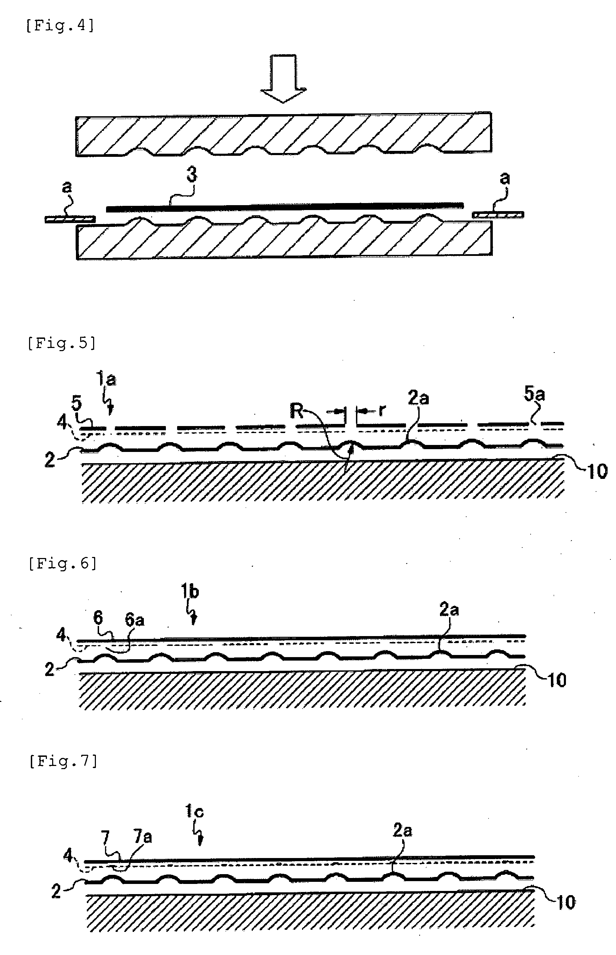

As shown in Fig. 4, the recess 3a having the same shape and the same arrangement as the curved convex protrusion 2a is formed by performing press processing using the same metallic mold as the mold used when the curved convex protrusion 2a is processed and adjusting the pressing depth and press processing is performed while the metallic plate a having the thickness for the height to be made shallower being sandwiched between the two curved concave and convex metallic molds so that the pressing depth becomes a predetermined depth. If, for example, the depth of the recess 3a should be 0.05 mm for the height 1.00 mm of the protrusion 2a, the metallic plate a having the thickness of 0.95 mm is sandwiched.

As shown in Fig. 1, the sliding contact surface 3b on the back side of the sliding plate 3 is coated with a lubricant (for example, grease) 4 on an almost entire surface. With such a protrusion height, recess depth, and grease coating, the seismic isolation device 1 normally has the curved convex protrusion 2a and the recess 3a overlapping and engaging in the seismic intensity of about 1 to 4, but if the seismic intensity is weak 5 or more and the seismic isolation device 1, computers and things for exhibition sway horizontally together with the floor of the building, the recess 3a of the sliding plate 3 of the seismic isolation device 1 gets out of a concave/convex overlapping state and the sliding plate 3 smoothly moves in the horizontal direction together with the computers and things for exhibition with a low friction coefficient. The magnitude of an earthquake to get out of the concave/convex overlapping state depends on the engaging height (depth) and can be set not only to the seismic intensity of weak 5 or more, but also to the seismic intensity of weak 6 or more. This also applies when the sliding contact surface 3b on the back side of the sliding plate 3 is coated with a tetrafluoroethylene resin or silicone resin.

In the second embodiment, as shown in Fig. 5, a sliding plate 5 in a seismic isolation device 1a has a through hole 5a with which only a portion of an apex of the curved convex protrusion 2a of the base board 2 can be engaged formed a high-friction portion thereof. The through hole 5a is formed in such a way that a diameter r thereof is smaller than a radius R of the curved convex protrusion 2a of the base board 2. The through hole 5a is excluded from coating of the lubricant 4. In a normal resting state, the apex of the curved convex protrusion 2a of the base board 2 fits into the through hole 5a.

When a major earthquake occurs, the sliding plate 5 of a device according to the second embodiment gets out of a fitting state with the base board 2 due to acceleration α with the high friction coefficient µ₂ and moves in the horizontal direction relative to the base board 2 to act as a seismic isolation device by suppressing almost all swaying motion of exhibited things. Then, as shown in Fig. 8, the through hole 5a preferably has a smooth cut surface on the side of the sliding contact surface by being processed by punching using a punching tool p such as a punch from the side on which the curved convex protrusion 2a of the base board 2 comes into contact.

In the third embodiment, as shown in Fig. 6, the entire surface of the sliding contact surface is coated with the lubricant 4 excluding a high-friction portion 6a on the sliding contact surface of a sliding plate 6. In such a seismic isolation device 1b, the high friction coefficient µ₂ is achieved in an engagement state of the high-friction portion 6a and the curved convex protrusion 2a of the base board 2.

In the fourth embodiment, as shown in Fig. 7, sandblasting 7a is performed on a high-friction portion on the sliding contact surface on the back side of a sliding plate 7. Then, an almost entire surface of the sliding contact surface on the back side of the sliding plate 7 is uniformly coated with the lubricant 4. In this manner, the high friction coefficient µ₂ is realized by irregularities caused by surface roughing of a sandblasted surface 7a in a seismic isolation device 1c. In this manner, the magnitude of an earthquake to get out of the concave/convex overlapping state can be set not only to the seismic intensity of weak 5 or more, but also to the seismic intensity of weak 6 or more.

As shown in Fig. 9, an almost entire surface of the sliding contact surface of the sliding plate 6 is uniformly coated with the lubricant 4 mixed with powder. The powder is, for example, diamond, calcium carbide, calcium carbonate, aluminum, alumina, glass, polyethylene, tetrafluoroethylene, silica, rubber, boron compound, carbon, boron nitride, titanium oxide, magnesium alloy, molybdenum sulfide, zinc oxide, or cerium oxide and the size thereof is 1 µm to 50 µm.

### Industrial Applicability

A seismic isolation device according to the present invention and an installation method thereof can easily be applied to all base isolation objects such as furniture, decorative objects, computers, independent houses and the like.

### Reference Signs List

- 1: Seismic isolation device according to the first embodiment
- 1a: Seismic isolation device according to the second embodiment
- 1b: Seismic isolation device according to the third embodiment
- 1c: Seismic isolation device according to the fourth embodiment
- 2: Base board
- 2a: Curved convex protrusion
- H: Height of the curved convex protrusion of the base board
- R: Radius of the curved convex protrusion
- 3: Sliding plate
- 3a: High-friction portion
- 3b: Sliding contact surface of the sliding plate
- d: Depth of the recess of the sliding plate
- 4: Lubricant
- 5: Sliding plate according to the second embodiment
- 5a: Through hole
- r: Diameter of the through hole
- 6: Sliding plate according to the third embodiment
- 6a: High-friction portion
- 7: Sliding plate according to the fourth embodiment
- 7a: Sandblasted surface
- 10: Installation floor
- a: Metallic plate
- µ: Apparent friction coefficient
- µ₁: Static friction coefficient of the conventional seismic isolation device
- µ₂: Static friction coefficient of the seismic isolation device according to the present invention
- δ: Moving displacement
- p: Punching tool

## Claims

1. A seismic isolation device (1) including a tabular base board (2) having a plurality of curved convex protrusions (2a) formed thereon and a sliding plate (3) having a sliding contact surface (3b) that is slidingly in contact with the plurality of curved convex protrusions (2a) and placed on a side of the convex protrusions of the base board (2), **characterised in that**
the sliding contact surface (3b) of the sliding plate (3) includes a plurality of high-friction portions (3a) arranged corresponding to the plurality of curved convex protrusions (2a) and enabling stable rest in a contact state with the plurality of the curved convex protrusion (2a) and a sliding surface (3b) other than the high-friction portions (3a) has a lower apparent friction coefficient than the high-friction portions.

2. The seismic isolation device according to claim 1, wherein
the high-friction portion (3a) on the sliding contact surface (3b) of the sliding plate (3) is a curved concave portion formed so as to have a concave curved surface in a same shape as a curved surface of the convex protrusion (2a) of the base board (2) and have a depth smaller than a height of the convex protrusion.

3. The seismic isolation device according to claim 1,
wherein only the sliding surface (3b) on the sliding contact surface of the, sliding plate (3) is uniformly coated with a lubricant (4).

4. The seismic isolation device according to claim 3,
wherein only the high-friction portion (3a) on the sliding contact surface of the sliding plate (3) is sandblasted.

5. The seismic isolation device according to claim 1,
wherein the high-friction portion (3a) on the sliding contact surface of the sliding plate (3) is a through hole (5a) formed so as to have a smaller diameter than the diameter of the curved convex protrusion, thereby fitting only a portion of the curved convex protrusion into the through hole (5a).

## Patentansprüche

1. Erdbebenisolationsvorrichtung (1) mit einer tafelförmigen Grundplatte (2) mit einer Mehrzahl darauf ausgebildeter gekrümmter konvexer Vorsprünge (2a) und einer Gleitplatte (3) mit einer Gleitkontaktfläche (3b), die gleitend in Berührung mit der Mehrzahl gekrümmter konvexer Vorsprünge (2a) ist und an einer Seite der konvexen Vorsprünge der Grundplatte (2) angeordnet ist, **dadurch gekennzeichnet, dass**
die Gleitkontaktfläche (3b) der Gleitplatte (3) eine Mehrzahl Abschnitte (3a) mit hohem Reibwert einschließt, die entsprechend der Mehrzahl gekrümmter konvexer Vorsprünge (2a) angeordnet ist und die eine stabile Auflage in einem Berührungszustand zwischen der Mehrzahl der gekrümmten konvexen Vorsprünge (2a) und einer nicht die Abschnitte (3a) mit hohem Reibwert darstellenden Gleitfläche (3b) ermöglicht, die einen niedrigeren offensichtlichen Reibungskoeffizienten aufweist als die Abschnitte mit hohem Reibwert.

2. Erdbebenisolationsvorrichtung nach Anspruch 1, wobei
der Abschnitt (3a) mit hohem Reibwert auf der Gleitkontaktfläche (3b) der Gleitplatte (3) einen gekrümmten konkaven Abschnitt darstellt, der derart ausgebildet ist, dass er eine konkave gekrümmte Fläche derselben Form aufweist wie eine gekrümmte Fläche des konvexen Vorsprungs (2a) der Grundplatte (2) sowie eine Tiefe, die kleiner ist als eine Höhe des konvexen Vorsprungs.

3. Erdbebenisolationsvorrichtung nach Anspruch 1,
wobei nur die Gleitfläche (3b) auf der Gleitkontaktfläche der Gleitplatte (3) gleichmäßig mit einem Schmiermittel (4) beschichtet ist.

4. Erdbebenisolationsvorrichtung nach Anspruch 3,
wobei nur der Abschnitt (3a) mit hohem Reibwert auf der Gleitkontaktfläche der Gleitplatte (3) sandgestrahlt ist.

5. Erdbebenisolationsvorrichtung nach Anspruch 1,
wobei der Abschnitt (3a) mit hohem Reibwert auf der Gleitkontaktfläche der Gleitplatte (3) ein Durchgangsloch (5a) darstellt, das so ausgebildet ist, dass es einen kleineren Durchmesser aufweist als der Durchmesser des gekrümmten konvexen Vorsprungs, wodurch nur ein Teil des gekrümmten konvexen Vorsprungs in das Durchgangsloch (5a) passt.

## Revendications

1. Dispositif d'isolation sismique (1) comprenant un panneau de support (2) tabulaire sur lequel sont formées une pluralité de protubérances convexes courbées (2a) et une plaque coulissante (3) possédant une surface de contact coulissante (3b) qui est en contact coulissant avec la pluralité de protubérances convexes courbées (2a) et placée sur un côté des protubérances convexes du panneau de support (2), **caractérisé en ce que**
la surface de contact coulissante (3b) de la plaque coulissante (3) comprend une pluralité de portions à haut coefficient de friction (3a) disposées en correspondance avec la pluralité de protubérances convexes courbées (2a) et permettant un appui stable dans un état de contact avec la pluralité de protubérances convexes courbées (2a) et une surface coulissante (3b) autre que les portions à haut coefficient de friction (3a) qui possède un coefficient de friction apparent inférieur à celui des portions à haut coefficient de friction.

2. Le dispositif d'isolation sismique selon la revendication 1, dans lequel
la portion à haut coefficient de friction (3a) sur la surface de contact coulissante (3b) de la plaque coulissante (3) est une portion concave courbée formée de manière à posséder une surface courbée concave de même forme qu'une surface courbée de la protubérance convexe (2a) du panneau de support (2) et à présenter une profondeur inférieure à une hauteur de la protubérance convexe.

3. Le dispositif d'isolation sismique selon la revendication 1,
dans lequel seule la surface coulissante (3b) sur la surface de contact coulissante de la plaque coulissante (3) est uniformément revêtue d'un lubrifiant (4).

4. Le dispositif d'isolation sismique selon la revendication 3,
dans lequel seule la portion à haut coefficient de friction (3a) sur la surface de contact coulissante de la plaque coulissante (3) est sablée.

5. Le dispositif d'isolation sismique selon la revendication 1,
dans lequel la portion à haut coefficient de friction (3a) sur la surface de contact coulissante de la plaque coulissante (3) est un trou traversant (5a) formé de manière à posséder un diamètre inférieur au diamètre de la protubérance convexe courbée, si bien que seule une portion de la protubérance convexe courbée vient s'adapter dans le trou traversant (5a).
